# EUROPEAN PATENT SPECIFICATION

(11) **EP 2 692 436 B1**
(45) Date of publication and mention of the grant of the patent: **22.08.2018**
(21) Application number: 12764386.4
(22) Date of filing: 21.03.2012
(51) Int. Cl.: B01J 29/74, B01D 53/94, B01J 20/18, B01J 29/46, F01N 3/08, F01N 3/10, F01N 3/20, B01J 20/28, B01J 37/02, B01J 35/00, B01J 20/02, B01J 20/06, B01J 20/08, B01J 20/30, B01J 20/32, B01J 21/04, B01J 23/44, B01J 29/70, B01J 35/04, B01J 20/10

(54) **EXHAUST GAS PURIFICATION CATALYST**
ABGASREINIGUNGSKATALYSATOR
CATALYSEUR DE PURIFICATION DES GAZ D'ÉCHAPPEMENT

(30) Priority: 29.03.2011 JP 2011072723
(43) Date of publication of application: 05.02.2014
(73) Proprietor: TOYOTA JIDOSHA KABUSHIKI KAISHA, Toyota-shi, Aichi-ken, 471-8571 (JP)
(72) Inventor: SHINMYO, Yusuke,, Toyota-shi, Aichi-ken, 471-8571 (JP); TAKAGI, Nobuyuki,, Toyota-shi, Aichi-ken, 471-8571 (JP); INDE, Ryoichi,, Kakegawa-shi, Shizuoka 437-1492 (JP)
(74) Representative: Kuhnen & Wacker Patent- und Rechtsanwaltsbüro PartG mbB
(86) International application number: PCT/JP2012/057207
(87) International publication number: WO 2012/133055

(56) References cited:
- EP-A1- 0 842 700
- EP-A1- 1 547 682
- EP-A1- 1 721 665
- WO-A1-2012/160391
- WO-A2-2013/050784
- JP-A- H0 724 333
- JP-A- 10 174 846
- JP-A- 10 202 111
- JP-A- H08 141 405
- JP-A- 2001 205 096
- JP-A- 2008 540 096

## Description

### TECHNICAL FIELD

The present invention relates to an exhaust gas purifying catalyst. More specifically, the present invention relates to an exhaust gas purifying catalyst for diesel engines.

### BACKGROUND ART

Recently, purification of an exhaust gas discharged to the atmosphere is an environmentally important problem, and in view of air pollution control, the regulations are strengthened. In order to purify an exhaust gas discharged from an internal combustion engine such as automobile engine, an exhaust gas purifying catalyst is used.

For example, an exhaust gas discharged from an automobile engine is purified by an exhaust gas purifying catalyst and then released to the atmosphere. However, when starting the engine, the exhaust gas purifying catalyst is at a low temperature, and therefore the activity of the exhaust gas purifying catalyst is low, as a result, the exhaust gas may not be sufficiently purified.

On this account, various studies are being made to enable exhaust gas purification even at the engine starting where the activity of the exhaust gas purifying catalyst is low.

For example, JP S61-43536 B2describes an exhaust gas purifying catalyst wherein a catalyst component constituted of platinum and rhodium is supported near the center portion through which an exhaust gas passes at a high flow velocity, and a catalyst component constituted of palladium and rhodium is support in the peripheral portion through which an exhaust gas passes at a relatively low flow velocity.

Also, in JP 2004-066013 A and JP 2007-160188 A , an exhaust gas purifying catalyst having a multilayer structure is obtained by forming a zeolite-containing hydrocarbon adsorbent layer on a substrate and stacking, on the hydrocarbon adsorbent layer, a catalyst component layer containing a noble metal such as platinum and a support powder such as alumina.

Furthermore, JP 2010-069380 A describes an exhaust gas purifying catalyst having an upper layer and a lower layer. The upper layer contains a rhodium-containing first heat-resistant composite oxide and a lanthanum-free alumina. The lower layer contains a platinum and/or palladium-containing second heat-resistant composite oxide and a lanthanum-containing alumina, and does not contain rhodium.

Another exhaust gas purification catalyst containing Pt-group metals as catalytically active components and two functional layers overlying each other on a carrier is disclosed by EP 0 842 700 A1. The first functional layer consists of a mixture of a first catalyst with at least one zeolite, and the second functional layer applied on the first functional layer contains a mixture of a second catalyst with at least one zeolite.

### SUMMARY OF THE INVENTION

### PROBLEMS TO BE SOLVED BY THE INVENTION

As described above, various catalyst configurations have been proposed, but under low-temperature conditions at the engine starting or the like, the carbon monoxide (CO) purification performance for an exhaust gas discharged from an internal combustion engine, particularly for an exhaust gas discharged from a diesel engine, is not necessarily satisfied.

Accordingly, the present invention provides an exhaust gas purifying catalyst capable of improving a carbon monoxide purification performance for an exhaust gas even under low-temperature conditions at the engine starting or the like.

### MEANS TO SOLVE THE PROBLEMS

The present inventors have found that reduction in the carbon monoxide purification performance under low-temperature conditions at the engine starting or the like occurs not only because the catalyst warming is insufficient, but also because a relatively large amount of an unburned hydrocarbon component is discharged due to incomplete warm-up of the engine, and this hydrocarbon component attaches to the catalyst to reduce the activity of the catalyst. Based on the understanding, the present inventors have reached the below-described exhaust gas purifying catalyst of the present invention.

The exhaust gas purifying catalyst of the present invention as set forth in claim 1 has a substrate, an oxidation catalyst layer disposed on the substrate, and an adsorption layer disposed on the oxidation catalyst layer. The oxidation catalyst layer contains support particles, a noble metal supported on the support particles and hydrocarbon adsorbent particles, wherein the supporting density of noble metal in the oxidation catalyst is 2.0 times or more than the supporting density of noble metal in the adsorption layer. The adsorption layer contains hydrocarbon adsorbent particles, support particles, and a noble metal supported on said support particles, wherein the content of hydrocarbon adsorbent particles in the adsorption layer is 1.5 times or more than the content of hydrocarbon adsorbent particles in the oxidation catalyst layer. The thickness of said adsorption layer is from 30 to 100 µm and said noble metal is platinum and palladium.

### EFFECTS OF THE INVENTION

According to the exhaust gas purifying catalyst of the present invention, a high carbon monoxide purification performance can be provided even under low-temperature conditions or the like.

### BRIEF DESCRIPTION OF THE DRAWINGS

[Fig. 1] Fig. 1 is a view schematically illustrating the action of the exhaust gas purifying catalyst of the present invention.
[Fig. 2] Fig. 2 is a view schematically illustrating the action of the conventional exhaust gas purifying catalyst.
[Fig. 3] Fig. 3 is a view schematically illustrating an outline of the NEDC (New European Driving Cycle) mode used for evaluating the exhaust gas purification performance of the catalyst of the present invention.
[Fig. 4] Fig. 4 is a view showing the evaluation results of Example A.
[Fig. 5] Fig. 5 is a view showing the evaluation results (C₁₀H₂₂) of Example B.
[Fig. 6] Fig. 6 is a view showing the evaluation results (C₃H₆) of Example B.
[Fig. 7] Fig. 7 is a view showing the evaluation results of Example C.

### MODE FOR CARRYING OUT THE INVENTION

The exhaust gas purifying catalyst of the present invention has a substrate, an oxidation catalyst layer disposed on the substrate, and an adsorption layer disposed on the oxidation catalyst layer, wherein both the oxidation catalyst layer and the adsorption layer contain support particles, a noble metal supported on the support particles, and hydrocarbon adsorbent particles.

Regarding the present invention, the oxidation catalyst layer means a layer in which the supporting density of noble metal (that is, the ratio of the amount (g) of a noble metal in the layer to the total amount (g) of all particles constituting the layer) is 2.0 times more of the supporting density of noble metal in the adsorption layer, e.g. a layer in which the supporting density of noble metal is 2.0 times or more, 3.0 times or more, or 5.0 times or more of the supporting density of noble metal in the adsorption layer. Also, regarding the present invention, the adsorption layer means a layer in which the content of hydrocarbon adsorbent particles (that is, the ratio of the amount (g) of hydrocarbon adsorbent particles in the layer to the total amount (g) of all particles constituting the layer) is 1.5 times or more of the content of hydrocarbon adsorbent particles in the oxidation catalyst layer, e.g. a layer in which the content of hydrocarbon adsorbent particles is 1.5 times, 2.0 times or more, 3.0 times or more, or 5.0 times or more of the content of hydrocarbon adsorbent particles in the oxidation catalyst layer.

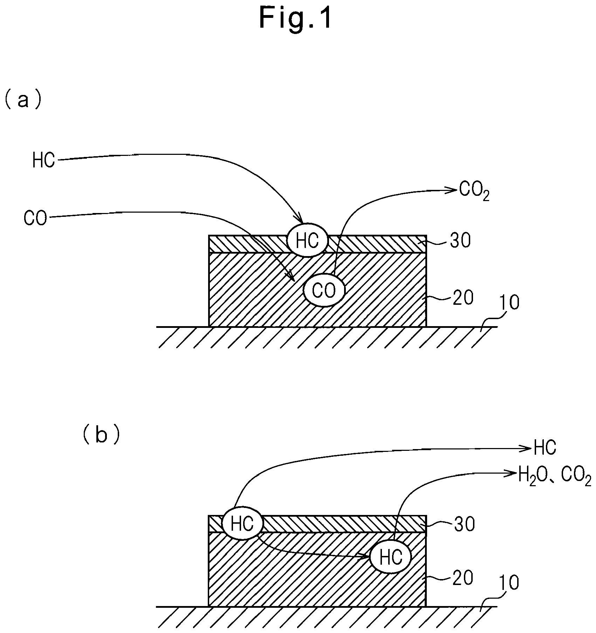

Specifically, the exhaust gas purifying catalyst of the present invention has a configuration shown in Fig. 1. That is, the exhaust gas purifying catalyst of the present invention has a substrate (10), an oxidation catalyst layer (20) disposed on the substrate, and an adsorption layer (30) disposed on the oxidation catalyst layer. By virtue of having such a configuration, even when a relatively large amount of a hydrocarbon component is contained in the exhaust gas due to incomplete warm-up of the engine, the exhaust gas purifying catalyst of the present invention can prevent the hydrocarbon component from attaching to a noble metal in the oxidation catalyst layer, as a result, reduction in the catalytic activity of the noble metal can be suppressed.

That is, in the embodiment schematically shown in Fig. 1, at the engine starting where the engine warm-up is incomplete to allow a relatively large amount of hydrocarbon to be contained in the exhaust gas, and at the same time, the catalyst is insufficiently warmed and exhibits a low catalytic activity, as shown in Fig. 1(a), a hydrocarbon component (HC) contained in the exhaust gas is adsorbed and held in the adsorbent layer (30) and can hardly reach the oxidation catalyst layer (20). On the other hand, carbon monoxide (CO) that is less likely to be adsorbed in the adsorbent layer as compared with the hydrocarbon component reaches the oxidation catalyst layer (20) through the adsorbent layer (30) and is oxidized into carbon dioxide (CO₂) and discharged.

In the exhaust gas purifying catalyst of the present invention, a hydrocarbon component (HC) is adsorbed in the adsorbent layer (30), and in turn, the amount of a hydrocarbon component (HC) reaching the oxidation catalyst layer (20) is relatively small, so that the tendency of a hydrocarbon component (HC) to attach to a noble metal of the oxidation catalyst layer (20) and reduce the catalytic activity of the noble metal can be suppressed.

After that, when the catalyst is sufficiently warmed, as shown in Fig. 1(b), the hydrocarbon component (HC) adsorbed on the adsorbent layer (30) desorbs, and is oxidized into water (H₂O) and carbon dioxide (CO₂) in the oxidation catalyst layer (20) which is located on the lower side or the downstream side of the adsorbent layer (30), and discharged.

Such an exhaust gas purifying catalyst of the present invention is particularly for purifying an exhaust gas discharged from an internal combustion engine using a relatively large hydrocarbon as a hydrocarbon fuel, e.g. an exhaust gas discharged from a diesel engine. Because, a gasoline used in a gasoline engine is composed of hydrocarbons having a carbon number of approximately from 4 to 10, whereas a light oil used in a diesel engine is composed of hydrocarbons having a carbon number of approximately from 15 to 17. Therefore, when an unburned light oil component is attached to the catalyst, the degree of inactivation of the catalyst is large. According to the exhaust gas purifying catalyst of the present invention, due to the adsorption layer, the light oil can be prevented from attaching to a noble metal in the oxidation catalyst layer.

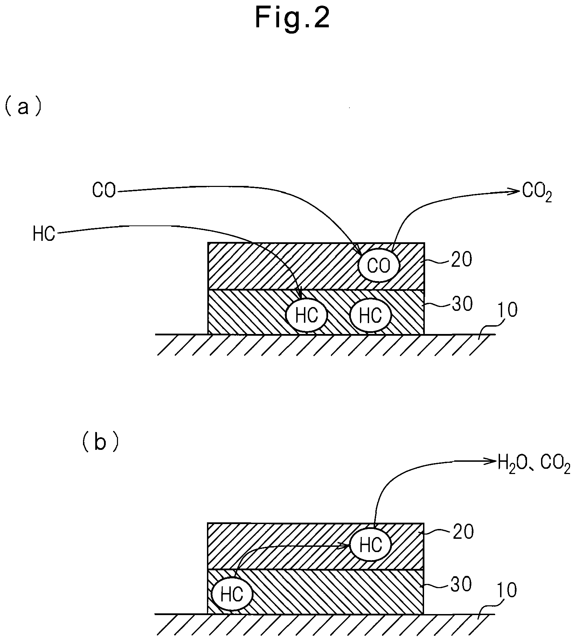

Incidentally, in the conventional exhaust gas purifying catalyst using a hydrocarbon adsorbent layer, a hydrocarbon adsorbent layer is disposed on a substrate, and an oxidation catalyst layer is disposed thereon.
That is, the conventional exhaust gas purifying catalyst using a hydrocarbon adsorbent layer has, as shown in Fig. 2, a substrate (10), an adsorption layer (30) disposed on the substrate, and an oxidation catalyst layer (20) disposed on the adsorption layer.

In the above-described conventional exhaust gas purifying catalyst, when the catalyst warming is insufficient and the catalytic activity is low, as shown in Fig. 2(a), a hydrocarbon component (HC) contained in the exhaust gas is adsorbed and held in the adsorbent layer (30), and when the catalyst is sufficiently warmed, as shown in Fig. 2(b), the hydrocarbon component (HC) adsorbed in the adsorbent layer (30) desorbs and is oxidized into water (H₂O) and carbon dioxide (CO₂) in the oxidation catalyst layer (20) which is located on the upper side of the adsorbent layer, and then discharged.

Accordingly, such a conventional exhaust gas purifying catalyst is preferred for holding a hydrocarbon component during insufficient catalyst warming, and thereafter, when the catalyst is sufficiently warmed, desorbing the hydrocarbon component to complete the purification. However, in such a conventional exhaust gas purifying catalyst, a hydrocarbon component passes through the oxidation catalyst layer when the catalyst warming is insufficient, and there is a problem that a part of the hydrocarbon component attaches to a noble metal in the oxidation catalyst layer to reduce the catalytic activity of the noble metal.

Based on this finding of a problem that a part of a hydrocarbon component attaches to a noble metal at low temperatures to reduce the catalytic activity of the noble metal, the present invention provides an exhaust gas purifying catalyst desirable in terms of carbon monoxide purification at low temperatures.

### (Layer Thickness)

In the exhaust gas purifying catalyst of the present invention, the thickness of the adsorption layer is from 30 to 100 µm or.

If the thickness of the adsorption layer is too small, at the engine staring where a relatively large amount of a hydrocarbon is contained in the exhaust gas due to incomplete engine warm-up, and the catalyst activity is low because of insufficient catalyst warming, a hydrocarbon component sometimes passes through the adsorption layer to reach the oxidation catalyst layer, and attaches to a noble metal in the oxidation catalyst layer to reduce the catalytic activity. Also, if the thickness of the adsorption layer is too large, an exhaust gas component such as carbon monoxide to be purified may not sufficiently reach the oxidation catalyst layer by the diffusion.

In the exhaust gas purifying catalyst of the present invention, the total thickness of the oxidation catalyst layer and the adsorption layer may be 100 µm or more, 150 µm or more, or 200 µm or more, and may be 300 µm or less, or 250 µm or less.

If the total thickness of the oxidation catalyst layer and the adsorption layer is too small, the exhaust gas purifying catalyst may lack the catalyst amount and in turn, an adequate purification of the exhaust gas may not be achieved. Also, if the total thickness of the oxidation catalyst layer and the adsorption layer is too large, the exhaust gas may not reach the substrate side of the oxidation catalyst layer and a noble metal supported on the substrate side of the oxidation catalyst layer may not be efficiently utilized.

Incidentally, regarding the present invention, the layer thickness is a value determined as the average value of measured values that are obtained by cutting the substrate at the position of 35 mm from each of the inflow-side end face and the outflow-side end face, and measuring the layer thickness in the corner part and the side part for any 4 cells on each end face side (16 portions in total).

### (Substrate)

In the exhaust gas purifying catalyst of the present invention, any substrate suitable for the purpose of exhaust gas purification may be used as the substrate. As the substrate, a honeycomb substrate, e.g. a straight flow-type honeycomb substrate or a wall flow-type honeycomb substrate (that is, a filter-type honeycomb substrate), can be used. Also, such a substrate may be a ceramic substrate formed of a ceramic material such as cordierite, or a metal substrate formed of a metal material such as stainless steel.

### (Oxidation Catalyst Layer and Adsorption Layer)

In the exhaust gas purifying catalyst of the present invention, not only the adsorption layer contains hydrocarbon adsorbent particles, but also the oxidation catalyst layer. In this case, even when the adsorption layer is relatively thin, a hydrocarbon passed through the adsorption layer, particularly a relatively small hydrocarbon, is adsorbed on the hydrocarbon adsorbent particles in the oxidation catalyst layer, whereby the catalytic activity of the noble metal in the oxidation catalyst layer can be maintained.

Furthermore, in the exhaust gas purifying catalyst of the present invention, not only the oxidation catalyst layer but also the adsorption layer contains support particles and a noble metal supported on the support particles. In this case, purification of an exhaust gas can be partially performed also by the noble metal in the adsorption layer.

### (Support Particle)

In the exhaust gas purifying catalyst of the present invention, any support particles can be used as the support particles for supporting a noble metal. As the support catalyst, e.g. particles of a metal oxide selected from the group consisting of alumina (Al₂O₃), ceria (CeO₂), zirconia (ZrO₂), silica (SiO₂), titania (TiO₂), solid solutions thereof (e.g. a ceria-zirconia (CeO₂-ZrO₂) composite oxide), and combinations thereof may be used.

Also, the metal oxide particles used as the support particles may further contain an oxide of an additive element selected from the group consisting of tungsten (W), praseodymium (Pr), lanthanum (La), yttrium (Y), neodymium (Nd), magnesium (Mg) and iron (Fe). In the metal oxide particles used as the support particles, the oxide of such an additive element may be contained in an amount of 50 mol% or less, 40 mol% or less, 30 mol% or less, 20 mol% or less, or 10 mol% or less, based on all metal elements.

### (Hydrocarbon Adsorbent Particle)

Regarding the present invention, the hydrocarbon adsorbent particles mean particles of a material having a porous structure and made of a material capable of adsorbing a hydrocarbon in its porous structure.

Such hydrocarbon adsorbent particles include zeolite particles, e.g. zeolite particles selected from the group consisting of A-type zeolite, ferrierite-type zeolite, ZSM-5 type zeolite, mordenite-type zeolite, β-type zeolite, X-type zeolite, Y-type zeolite, and combinations thereof.

### (Noble metal)

As the noble metal in the exhaust gas purifying catalyst of the present invention, platinum and palladium, are used.

The total amount of the noble metal supported may be 0.1 g/L-substrate or more, 0.3 g/L-substrate or more, 0.5 g/L-substrate or more, and may be 4.0 g/L-substrate or less, 3.0 g/L-substrate or less, or 2.0 g/L-substrate or less.

### EXAMPLES

The present invention is described below by referring to Examples, but the present invention is not limited to these Examples.

### <<Example A>>

In Example A, the effect of the thickness of the adsorption layer on the exhaust gas purification performance was examined.

In this Example, Catalysts A1 to A4 (not according to the invention) were prepared as shown in Table 1 below.

### [Table 1]

**Table 1**

| | | Catalyst A1 | Catalyst A2 | Catalyst A3 | Catalyst A4 |
|---|---|---|---|---|---|
| Adsorption layer (upper layer) | β-Type zeolite (g/L-substrate) | 35.3 | 60.0 | 84.7 | 106.0 |
| | Alumina (g/L-substrate) | 14.7 | 25.0 | 35.3 | 44.0 |
| | Supporting density of noble metal (g/g-layer) | 0% | 0% | 0% | 0% |
| | Zeolite content (g/g-layer) | 70.60% | 70.59% | 70.58% | 70.67% |
| | Layer thickness (µm) | 23 | 46 | 76 | 101 |
| Oxidation catalyst layer (lower layer) | Alumina (g/L-substrate) | 80.0 | 80.0 | 80.0 | 80.0 |
| | Platinum* (g/L-substrate) | 1.73 | 1.73 | 1.73 | 1.73 |
| | Palladium* (g/L-substrate) | 0.87 | 0.87 | 0.87 | 0.87 |
| | Supporting density of noble metal (g/g-layer) | 3.25% | 3.25% | 3.25% | 3.25% |
| | Zeolite content (g/g-layer) | 0% | 0% | 0% | 0% |
| | Layer thickness (µm) | 115 | 115 | 115 | 115 |
| Substrate | Honeycomb substrate made of cordierite (L) | 1.1 | 1.1 | 1.1 | 1.1 |

| | | | | | |
|---|---|---|---|---|---|
| *Platinum and palladium were supported on alumina. | | | | | |

More specifically, in this Example, a cordierite-made honeycomb substrate having a volume of 1.1 liter (L) was used as the substrate, and on this substrate, an oxidation catalyst layer (lower layer) composed of a noble metal-supported alumina support powder, and an absorption layer (upper layer) composed of zeolite and an alumina support powder were stacked in this order, whereby Catalysts A1 to A4 were prepared. That is, in Catalysts A1 to A4, the oxidation catalyst layer was constant, but the thickness of the adsorption layer was increased in sequence from Catalyst A1 to Catalyst A4.

### (Formation of Oxidation Catalyst Layer of Catalysts A1 to A4)

The oxidation catalyst layer was obtained as follows. That is, water was added to an alumina powder to make an alumina slurry, and a noble metal solution, which was adjusted to give a platinum amount of 1.73 g and a palladium amount of 0.87 g per 68 g of the alumina powder, was added to the alumina slurry. The mixture was stirred over 2 hours, then dried at 130°C and further dried at 500°C for 1 hour to obtain a noble metal-supported alumina powder.

Thereafter, the noble metal-supported alumina powder, an aluminum nitrate solution were mixed to obtain a noble metal-supported alumina slurry, the aluminum nitrate being in an amount of producing 12 g of alumina per 70.6 g of the noble metal-supported alumina powder after firing.

The noble metal-supported alumina slurry was coated on the cordierite-made substrate, dried and then fired at 500°C over 1 hour to form an oxidation catalyst layer on the substrate. In Catalysts A1 to A4, the amount of the oxidation catalyst layer coated on the substrate was adjusted to become 80 g per liter of the substrate.

### (Formation of Adsorption Layer of Catalysts A1 to A4)

The adsorption layer was obtained as follows. That is, a β-type zeolite powder and an aluminum nitrate solution were mixed to obtain a zeolite slurry, the aluminum nitrate being in an amount of producing 14.7 g of alumina per 35.3 g of the β-type zeolite powder after firing. This zeolite slurry was coated on the cordierite-made substrate having thereon the oxidation catalyst layer, then dried and fired at 500°C over 1 hour to form an adsorption layer. In Catalysts A1 to A4, the amount of the adsorption layer coated on the substrate was adjusted to become 50 g, 85 g, 120 g and 150 g, respectively, per liter of the substrate.

### (Endurance)

With respect to Catalysts A1 to A4 obtained, simple endurance was performed by using an electric furnace, where the catalyst was heated at 650°C over 50 hours and thereafter heated at 660°C over 10 hours in air. Also, as a pretreatment for evaluation, the catalyst bed temperature was set to 600°C by simulating particulate matter (PM) combustion regeneration.

### (Evaluation)

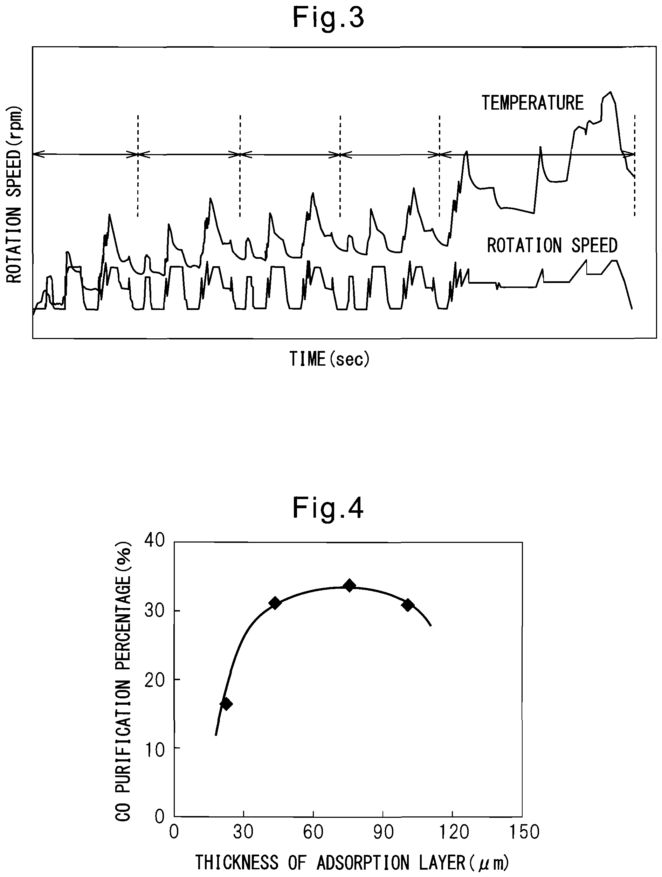

With respect to Catalysts A1 to A4 subjected to the endurance, the exhaust gas purification performance was evaluated using an exhaust gas discharged from a 2.2-liter diesel engine. The NEDC (New European Driving Cycle) mode (see, Fig. 3) was reproduced using the diesel engine. Incidentally, the carbon dioxide (CO₂) emission in this diesel engine corresponded to 90 g/km.

Fig. 4 shows the evaluation results of Catalysts A1 to A4.

It is understood from Fig. 4 that, as the thickness of the adsorption layer increased from about 20 µm (Catalyst A1), the carbon monoxide purification performance was improved, and when the thickness of the adsorption layer was about 40 µm or more, good carbon monoxide purification performance was obtained. This indicates that under the conditions used in this Example, the thickness of the adsorption layer is preferably about 40 µm or more so as to prevent a large hydrocarbon discharged from a diesel engine from reaching the oxidation catalyst layer.

Also, it is understood from Fig. 4 that when the thickness of the adsorption layer is increased to exceed about 100 µm (Catalyst A4), the carbon monoxide purification performance was rather decreased. This indicates that, when an adsorption layer having a thickness of about 100 µm or more is used, the carbon monoxide to be purified does not sufficiently diffuse to the oxidation catalyst layer.

### <<Example B>>

In Example B, the effect of the size of hydrocarbon on the adsorption by the adsorption layer was evaluated.

In this Example, Catalysts B1 (not according to the invention) and B2 were prepared as shown in Table 2 below.

### [Table 2]

**Table 2**

| | | Catalyst B1 | Catalyst B2 |
|---|---|---|---|
| Adsorption layer (upper layer) | β-Type zeolite (g/L-substrate) | 60.0 | 60.0 |
| | Alumina (g/L-substrate) | 25.0 | 25.0 |
| | Platinum* (g/L-substrate) | 0.87 | 0.87 |
| | Palladium* (g/L-substrate) | 0.43 | 0.43 |
| | Supporting density of noble metal (g/g-layer) | 1.53% | 1.53% |
| | Zeolite content (g/g-layer) | 70.59% | 70.59% |
| Oxidation catalyst layer (lower layer) | β-Type zeolite (g/L-substrate) | 0.0 | 30.0 |
| | Alumina (g/L-substrate) | 80.0 | 50.0 |
| | Platinum* (g/L-substrate) | 1.73 | 1.73 |
| | Palladium* (g/L-substrate) | 0.87 | 0.87 |
| | Supporting density of noble metal (g/g-layer) | 3.25% | 3.25% |
| | Zeolite content (g/g-layer) | 0.00% | 37.50% |
| Substrate | Honeycomb substrate made of cordierite (mL) | 35 | 35 |

| | | | |
|---|---|---|---|
| *Platinum and palladium were supported on alumina. | | | |

More specifically, in this Example, a cordierite-made honeycomb substrate having a volume of 35 milliliter (mL) was used as the substrate and on this substrate, an oxidation catalyst layer (lower layer) composed of a noble metal-supported alumina support powder, and an absorption layer (upper layer) composed of zeolite and a noble metal-supported alumina support powder were stacked in this order, whereby Catalyst B1 was prepared. Also, in this Example, Catalyst B2 was obtained in the same manner as Catalyst B1, except that an oxidation catalyst layer composed of zeolite and a noble metal-supported alumina support powder was used in place of the oxidation catalyst layer composed of only a noble metal-supported alumina support powder. That is, Catalyst B1 did not contain zeolite in the oxidation catalyst layer, whereas Catalyst B2 contained zeolite in the oxidation catalyst layer.

Each of Catalysts B1 and B2 was pretreated by feeding a pretreatment gas containing 10 mol% of oxygen and balance nitrogen at 500°C over 10 minutes and thereafter, evaluated by feeding an adsorption gas containing 1,000 ppmC of hydrocarbon (C₁₀H₂₂ or C₃H₆) and balance nitrogen at 100°C over 30 minutes.

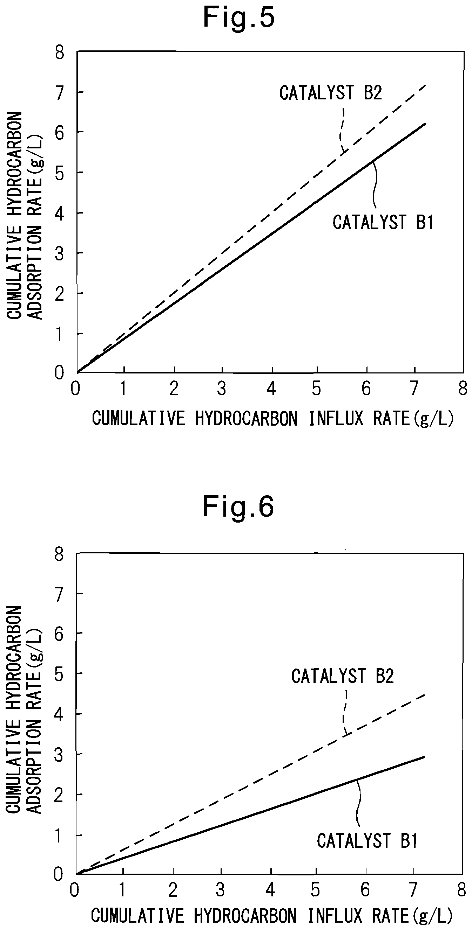

Fig. 5 shows the results of evaluation using C₁₀H₂₂ as the hydrocarbon. As seen from Fig. 5, the difference between the cumulative hydrocarbon adsorption rate for Catalyst B1 not containing zeolite in the oxidation catalyst layer, and the cumulative hydrocarbon adsorption rate for Catalyst B2 containing zeolite in the oxidation catalyst layer was relatively small. The ratio (cumulative hydrocarbon adsorption rate for Catalyst B2/cumulative hydrocarbon adsorption rate for Catalyst B1) was about 1.15. This indicates that the amount of a hydrocarbon adsorbed to zeolite in the oxidation catalyst layer of Catalyst B2 is relatively small, that is, the amount of a hydrocarbon passed through the adsorption layer is relatively small.

Also, Fig. 6 shows the results of evaluation using C₃H₆ as the hydrocarbon. As seen from Fig. 6, the difference between the cumulative hydrocarbon adsorption rate for Catalyst B1 not containing zeolite in the oxidation catalyst layer, and the cumulative hydrocarbon adsorption rate for Catalyst B2 containing zeolite in the oxidation catalyst layer was relatively large. The ratio (cumulative hydrocarbon adsorption rate for Catalyst B2/cumulative hydrocarbon adsorption rate for Catalyst B1) was about 1.53. This indicates that the amount of a hydrocarbon adsorbed to zeolite in the oxidation catalyst layer of Catalyst B2 is relatively large, i.e. the amount of a hydrocarbon passed through the adsorption layer is relatively large.

As understood from comparison of Fig. 5 and Fig. 6, the amount of a hydrocarbon passed through the adsorption layer is relatively small when using C₁₀H₂₂ as the hydrocarbon, while the amount of a hydrocarbon passed through the adsorption layer becomes relatively large when using C₃H₆ as the hydrocarbon. That is, it is understood from comparison of Fig. 5 and Fig. 6 that, according to the exhaust gas purifying catalyst of the present invention, a relatively large hydrocarbon component is efficiently adsorbed in the adsorption layer, and in turn, attachment of a relatively large hydrocarbon component to the noble metal, and then the resulting reduction in the catalytic activity can be efficiently inhibited.

### <<Example C>>

In Example C, the effect obtained by incorporating zeolite into the oxidation catalyst layer was examined.

In this Example, Catalysts C1 (not according to the invention), C2, C3 and CX (Comparison) were prepared as shown in Table 3 below.

### [Table 3]

**Table 3**

| | | Catalyst CX (Comparison) | Catalyst C1 | Catalyst C2 | Catalyst C3 |
|---|---|---|---|---|---|
| Adsorption layer | Zeolite (g/L-substrate) | - | 60.0 | 60.0 | 60.0 |
| | Alumina (g/L-substrate) | - | 35.0 | 35.0 | 35.0 |
| | Platinum* (g/L-substrate) | - | 0.87 | 0.87 | 0.87 |
| | Palladium* (g/L-substrate) | - | 0.43 | 0.43 | 0.43 |
| | Supporting density of noble metal (g/g-layer) | - | 1.37% | 1.37% | 1.37% |
| | Zeolite content (g/g-layer) | - | 63.16% | 63.16% | 63.16% |
| | Layer thickness (µm) | - | 50.0 | 48.0 | 45.0 |
| Oxidation catalyst layer | Zeolite** (g/L-substrate) | 60.0 | 0.0 | 30.0 | 30.0 |
| | Alumina (g/L-substrate) | 105.0 | 80.0 | 50.0 | 50.0 |
| | Platinum* (g/L-substrate) | 2.6 | 1.73 | 1.73 | 1.73 |
| | Palladium* (g/L-substrate) | 1.3 | 0.87 | 0.87 | 0.87 |
| | Supporting density of noble metal (g/g-layer) | 2.36% | 3.25% | 3.25% | 3.25% |
| | Zeolite content (g/g-layer) | 36.36% | 0.00% | 37.50% | 37.50% |
| | Layer thickness (µm) | 155.0 | 115.0 | 110.0 | 110.0 |
| Substrate | Honeycomb substrate made of cordierite (L) | 1.1 | 1.1 | 1.1 | 1.1 |

| | | | | | |
|---|---|---|---|---|---|
| *Platinum and palladium were supported on alumina. ** In Catalysts CX and C2, β type, and in Catalyst C3, Fe/ZSM type. | | | | | |

More specifically, in this Example, a cordierite-made honeycomb substrate having a volume of 1.1 liter (L) was used as the substrate, and on this substrate, an oxidation catalyst layer composed of a noble metal-supported alumina support powder, and an absorption layer composed of zeolite and a noble metal-supported alumina support powder were stacked in this order, whereby Catalyst C1 was prepared. Also, in this Example, Catalysts C2 and C3 were obtained in the same manner as Catalyst C1, except that an oxidation catalyst layer composed of zeolite and a noble metal-supported alumina powder was used in place of the oxidation catalyst layer composed of only a noble metal-supported alumina support powder. That is, Catalyst C1 did not contain zeolite in the oxidation catalyst layer, whereas Catalysts C2 and C3 contained zeolite in the oxidation catalyst layer. Specifically, Catalysts C1 to C3 were obtained as follows.

### (Formation of Oxidation Catalyst Layer of Catalyst C1)

The oxidation catalyst layer of Catalyst C1 was obtained as follows. That is, water was added to an alumina powder to make an alumina slurry. A noble metal solution was added to the alumina slurry, the noble metal solution being adjusted to provide platinum supported amount of 1.73 g and a palladium supported amount of 0.87 g per 60 g of the alumina powder. The mixture was stirred over 2 hours, then dried at 130°C and further dried at 500°C for 1 hour to obtain a noble metal-supported alumina powder.

Thereafter, the noble metal-supported alumina powder and an aluminum nitrate solution were mixed to obtain a noble metal-supported alumina slurry, the aluminum nitrate being in the amount of producing 20 g of alumina per 62.6 g of the noble metal-supported alumina powder after firing.

The noble metal-supported alumina slurry was coated on the cordierite-made substrate, dried and then fired at 500°C over 1 hour to form an oxidation catalyst layer on the substrate. The amount of the oxidation catalyst layer coated on the substrate was adjusted to be 80 g per liter of the substrate.

### (Formation of Oxidation Catalyst Layer of Catalyst C2)

The oxidation catalyst layer of Catalyst C2 was obtained as follows. That is, water was added to an alumina powder to make an alumina slurry, and a noble metal solution was added to the alumina slurry, the noble metal solution being adjusted to give a platinum supported amount of 1.73 g and a palladium supported amount of 0.87 g per 30 g of the alumina powder. The mixture was stirred over 2 hours, then dried at 130°C and further dried at 500°C for 1 hour to obtain a noble metal-supported alumina powder.

Thereafter, per 32.6 g of the noble metal-supported alumina powder, 30 g of β-type zeolite and an aluminum nitrate solution were mixed to obtain a noble metal-supported alumina slurry, the aluminum nitrate solution being in an amount of producing 20 g of alumina after firing.

The noble metal-supported alumina slurry was coated on the cordierite-made substrate, dried and then fired at 500°C over 1 hour to form an oxidation catalyst layer on the substrate. The amount of the oxidation catalyst layer coated on the substrate was adjusted to be 80 g per liter of the substrate.

### (Formation of Oxidation Catalyst Layer of Catalyst C3)

The oxidation catalyst layer of Catalyst C3 was obtained in the same manner as the oxidation catalyst layer of Catalyst C2, except for using Fe/ZSM-5 type zeolite in place of using β-type zeolite in the formation of the oxidation catalyst layer of Catalyst C2.

### (Formation of Adsorption Layer of Catalysts C1 to C3)

The adsorption layer of Catalysts C1 to C3 was obtained as follows. That is, water was added to an alumina powder to make an alumina slurry, and a noble metal solution was added to the alumina slurry, the noble metal solution being in an amount giving a platinum supported amount of 0.87 g and a palladium supported amount of 0.43 g per 20 g of the alumina powder. The mixture was stirred over 2 hours, then dried at 130°C and further dried at 500°C for 1 hour to obtain a noble metal-supported alumina powder.

Thereafter, per 21.3 g of the noble metal-supported alumina powder, 60 g of β-type zeolite and an aluminum nitrate solution were mixed to obtain a noble metal-supported alumina slurry, the aluminum nitrate solution being in an amount of producing 15 g of alumina after firing.

The noble metal-supported alumina slurry was coated on the cordierite-made substrate, dried and then fired at 500°C over 1 hour to form an adsorption layer on the substrate. In all of Catalysts C1 to C3, the amount of the adsorption layer coated on the substrate was adjusted to contain 60 g of β-type zeolite and 35 g of alumina per liter of the substrate.

### (Formation of Catalyst CX)

Catalyst CX (Comparison) was obtained as follows. That is, water was added to an alumina powder to make an alumina slurry, and a noble metal solution was added to the alumina slurry, the noble metal solution being adjusted to give a platinum supported amount of 2.6 g and a palladium supported amount of 1.3 g per 80 g of the alumina powder. The mixture was stirred over 2 hours, then dried at 130°C and further dried at 500°C for 1 hour to obtain a noble metal-supported alumina powder.

Thereafter, per 83.9 g of the noble metal-supported alumina powder, 60 g of β-type zeolite and an aluminum nitrate solution were mixed to obtain a noble metal-supported alumina slurry, the aluminum nitrate solution being in an amount of producing 25 g of alumina after firing.

The noble metal-supported alumina slurry was coated on the cordierite-made substrate, dried and then fired at 500°C over 1 hour to form an adsorption layer on the substrate. In Catalyst CX (Comparison), the total amount of the layers coated on the substrate was adjusted to become 165 g per liter of the substrate.

### (Endurance)

With respect to Catalysts C1 to C3 and CX (Comparison) obtained, simple endurance was performed by using an electric furnace, where the catalyst was heated at 650°C over 50 hours and thereafter heated at 660°C over 10 hours in air. Also, as a pretreatment for evaluation, the catalyst bed temperature was set to 600°C by simulating particulate matter (PM) combustion regeneration.

### (Evaluation)

With respect to Catalysts C1 to C3 and CX (Comparison) subjected to the endurance, the exhaust gas purification performance was evaluated using an exhaust gas discharged from a 2.2-liter diesel engine. The NEDC (New European Driving Cycle) mode (see, Fig. 3) was reproduced using the diesel engine. Incidentally, the carbon dioxide (CO₂) emission in this diesel engine corresponded to 90 g/km.

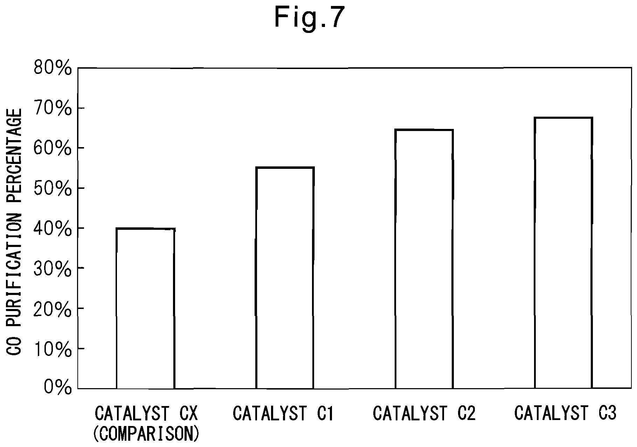

Fig. 7 shows the evaluation results of Catalysts C1 to C3 and CX (Comparison).

It is understood from Fig. 7 that, as compared with Catalyst CX (Comparison) containing both β-type zeolite and noble metal-supported alumina in a single layer, the carbon monoxide purification percentage was improved in Catalysts C1 to C3 having an oxidation catalyst layer and an adsorption layer.

Also, it is understood from Fig. 7 that as compared with Catalyst C1 not containing zeolite in the oxidation catalyst layer, the carbon monoxide purification percentage was improved in Catalysts C2 and C3 containing zeolite in the oxidation catalyst layer. That is, it is understood from Fig. 7 that, in Catalysts C2 and C3 containing zeolite in the oxidation catalyst layer, a hydrocarbon component passed through the adsorption layer is adsorbed on zeolite in the oxidation catalyst layer, whereby reduction in the catalytic activity of the oxidation catalyst layer can be more inhibited.

In addition, it is understood from Fig. 7 that, as compared with Catalyst C2 using β-type zeolite as the zeolite, the carbon monoxide purification percentage was further improved in Catalyst C3 using Fe/ZSM-5 type zeolite as the zeolite.

### DESCRIPTION OF REFERENCE NUMERALS

- 10:: Substrate
- 20:: Oxidation catalyst layer
- 30:: Adsorption layer

## Claims

1. An exhaust gas purifying catalyst for a diesel engine, comprising a substrate (10), an oxidation catalyst layer (20) disposed on said substrate (10), and an adsorption layer (30) disposed on said oxidation catalyst layer (20),
wherein:
said oxidation catalyst layer (20) comprises:
support particles,
a noble metal supported on said support particles, and
hydrocarbon adsorbent particles,
and the supporting density of noble metal in said oxidation catalyst layer (20) is 2.0 times or more of the supporting density of noble metal in said adsorption layer (30), the supporting density of noble metal being the ratio of the amount (g) of a noble metal in the layer to the total amount (g) of all particles constituting the layer,
said adsorption layer (30) comprises:
hydrocarbon adsorbent particles,
support particles, and
a noble metal supported on said support particles,
and the content of hydrocarbon adsorbent particles in said adsorption layer (30) is 1.5 times or more of the content of hydrocarbon adsorbent particles in said oxidation catalyst layer (20), the content of hydrocarbon adsorbent particles being the ratio of the amount (g) of hydrocarbon adsorbent particles in the layer to the total amount (g) of all particles constituting the layer, and
the thickness of said adsorption layer (30) is from 30 to 100 µm,
and wherein
said noble metal is platinum (Pt) and palladium (Pd).

2. The exhaust gas purifying catalyst according to claim 1, wherein the total thickness of said oxidation catalyst layer (20) and said adsorption layer (30) is 250 µm or less.

3. The exhaust gas purifying catalyst according to claim 1 or 2, wherein said substrate (10) is a honeycomb substrate.

4. The exhaust gas purifying catalyst according to any one of claims 1 to 3, wherein said support particles are particles of a metal oxide selected from the group consisting of alumina (Al₂O₃), ceria (CeO₂), zirconia (ZrO₂), silica (SiO₂), titania (TiO₂), solid solutions thereof, and combinations thereof.

5. The exhaust gas purifying catalyst according to any one of claims 1 to 4, wherein said hydrocarbon adsorbent particles are zeolite particles.

## Patentansprüche

1. Abgasreinigungskatalysator für einen Dieselmotor, aufweisend ein Substrat (10), eine Oxidationskatalysatorschicht (20), die sich auf dem Substrat (10) befindet, und eine Adsorptionsschicht (30), die sich auf der Oxidationskatalysatorschicht (20) befindet, wobei:
die Oxidationskatalysatorschicht (20) aufweist:
Tragepartikel,
ein Edelmetall, das auf den Tragepartikeln getragen ist, und
kohlenwasserstoffadsorbierende Partikel,
und die Tragedichte des Edelmetalls in der Oxidationskatalysatorschicht (20) das 2,0-fache oder mehr von der Tragedichte des Edelmetalls in der Adsorptionsschicht (30) beträgt, wobei die Tragedichte des Edelmetalls das Verhältnis der Menge (g) eines Edelmetalls in der Schicht zu der Gesamtmenge (g) aller Partikel, die die Schicht bilden, darstellt,
wobei die Adsorptionsschicht (30) aufweist:
kohlenwasserstoffadsorbierende Partikel,
Tragepartikel, und
ein Edelmetall, das auf den Tragepartikeln getragen ist,
und der Gehalt an kohlenwasserstoffadsorbierenden Partikeln in der Adsorptionsschicht (30) das 1,5-fache oder mehr von dem Gehalt an kohlenwasserstoffadsorbierenden Partikeln in der Oxidationskatalysatorschicht (20) beträgt, wobei der Gehalt an kohlenwasserstoffadsorbierenden Partikeln das Verhältnis der Menge (g) an kohlenwasserstoffadsorbierenden Partikeln in der Schicht zu der Gesamtmenge (g) aller Partikel, die die Schicht bilden, beträgt, und
wobei die Dicke der Adsorptionsschicht (30) zwischen 30 und 100 µm beträgt,
und das Edelmetall Platin (Pt) und Palladium (Pd) ist.

2. Abgasreinigungskatalysator nach Anspruch 1, wobei die Gesamtdicke der Oxidationskatalysatorschicht (20) und der Adsorptionsschicht (30) 250 µm oder weniger beträgt.

3. Abgasreinigungskatalysator nach Anspruch 1 oder 2, wobei das Substrat (10) ein Honigwabensubstrat ist.

4. Abgasreinigungskatalysator nach einem der Ansprüche 1 bis 3, wobei die Tragepartikel Partikel eines Metalloxids sind, die aus der Gruppe ausgewählt sind, die aus Tonerde (Al₂O₃), Ceroxid (CeO₂), Zirkonoxid (ZrO₂), Siliziumoxid (SiO₂), Titanoxid (TiO₂), Mischkristallen daraus und Kombination davon besteht.

5. Abgasreinigungskatalysator nach einem der Ansprüche 1 bis 4, wobei die kohlenwasserstoffadsorbierenden Partikel Zeolithpartikel sind.

## Revendications

1. Catalyseur de purification de gaz d'échappement pour un moteur diésel, comprenant un substrat (10), une couche de catalyseur d'oxydation (20) disposée sur ledit substrat (10), et une couche d'adsorption (30) disposée sur ladite couche de catalyseur d'oxydation (20),
dans lequel :
ladite couche de catalyseur d'oxydation (20) comprend :
des particules de support,
un métal noble supporté sur lesdites particules de support, et
des particules d'adsorbant d'hydrocarbures,
et la densité de support de métal noble dans ladite couche de catalyseur d'oxydation (20) est de 2,0 fois ou plus la densité de support de métal noble dans ladite couche d'adsorption (30), la densité de support de métal noble étant le rapport de la quantité (g) d'un métal noble dans la couche à la quantité totale (g) de toutes les particules constituant la couche,
ladite couche d'adsorption (30) comprend :
des particules d'adsorbant d'hydrocarbures,
des particules de support, et
un métal noble supporté sur lesdites particules de support,
et la teneur en les particules d'adsorbant d'hydrocarbures dans ladite couche d'adsorption (30) est de 1,5 fois ou plus la teneur en particules d'adsorbant d'hydrocarbures dans ladite couche de catalyseur d'oxydation (20), la teneur en particules d'adsorbant d'hydrocarbures étant le rapport de la quantité (g) de particules d'adsorbant d'hydrocarbures dans la couche à la quantité totale (g) de toutes les particules constituant la couche, et
l'épaisseur de ladite couche d'adsorption (30) est de 30 à 100 µm,
et dans lequel
ledit métal noble est le platine (Pt) et le palladium (Pd).

2. Catalyseur de purification de gaz d'échappement selon la revendication 1, dans lequel l'épaisseur totale de ladite couche de catalyseur d'oxydation (20) et de ladite couche d'adsorption (30) est de 250 µm ou moins.

3. Catalyseur de purification de gaz d'échappement selon la revendication 1 ou 2, dans lequel ledit substrat (10) est un substrat en nid d'abeilles.

4. Catalyseur de purification de gaz d'échappement selon l'une quelconque des revendications 1 à 3, dans lequel lesdites particules de support sont des particules d'un oxyde métallique choisi dans le groupe constitué par l'alumine (Al₂O₃), l'oxyde de cérium (CeO₂), la zircone (ZrO₂), la silice (SiO₂), l'oxyde de titane (TiO₂), leurs solutions solides, et leurs combinaisons.

5. Catalyseur de purification de gaz d'échappement selon l'une quelconque des revendications 1 à 4, dans lequel lesdites particules d'adsorbant d'hydrocarbures sont des particules de zéolite.
